# EUROPÄISCHE PATENTSCHRIFT

(11) **EP 4 159 363 B1**
(45) Veröffentlichungstag und Bekanntmachung des Hinweises auf die Patenterteilung: **04.09.2024**
(21) Anmeldenummer: 21199821.6
(22) Anmeldetag: 29.09.2021
(51) Int. Cl.: B23P 19/00, B21J 15/14, B21J 15/10, B21J 15/02, B21J 15/32, B25B 23/06, F16B 27/00

(54) **WERKZEUG ZUM WIEDERHOLTEN ZUFÜHREN EINZELNER BEFESTIGUNGSELEMENTE AUS EINEM VORRAT MIT MEHREREN BEFESTIGUNGSELEMENTEN**
TOOL FOR REPEATEDLY FEEDING INDIVIDUAL FASTENING ELEMENTS FROM A SUPPLY WITH A PLURALITY OF FASTENING ELEMENTS
OUTIL POUR L'ALIMENTATION RÉPÉTÉE EN ÉLÉMENTS DE FIXATION INDIVIDUELS À PARTIR D'UNE RÉSERVE COMPORTANT PLUSIEURS ÉLÉMENTS DE FIXATION

(43) Veröffentlichungstag der Anmeldung: 05.04.2023
(73) Patentinhaber: Airbus Operations GmbH, 21129 Hamburg (DE)
(72) Erfinder: Skirke, Jörn, 21129 Hamburg (DE); Papendick, Wolfgang, 21129 Hamburg (DE)
(74) Vertreter: LKGLOBAL Lorenz & Kopf Patentanwalt Attorney at Law PartG mbB

(56) Entgegenhaltungen:
- EP-A1- 3 292 923
- EP-A1- 3 626 362
- WO-A1-03/049895
- DE-A1- 102016 108 928
- FR-A1- 3 006 932
- US-A1- 2015 184 689
- US-A1- 2017 051 777
- US-B1- 11 117 183

## Beschreibung

### Technisches Gebiet

Die vorliegende Beschreibung betrifft ein Werkzeug zum wiederholten Zuführen einzelner Befestigungselemente aus einem Vorrat mit mehreren Befestigungselementen.

### Technischer Hintergrund

In der Serienfertigung von größeren technischen Einrichtungen, beispielsweise Fahrzeugen, können regelmäßig eine Vielzahl von Schraub- oder Nietverbindungen hergestellt werden. Bei Fahrzeugen, beispielsweise Luftfahrzeugen, können mitunter Arbeitsprozesse vorliegen, bei denen mehrere hundert Schließringbolzenverbindungen nacheinander hergestellt werden müssen. Diese können das Anbringen von Schließringbolzen umfassen, auf die ein Schließring aufgesteckt wird. Für das Aufstecken von Schließringen oder anderen Befestigungselementen sind Zuführvorrichtungen bekannt, bei denen die Befestigungselemente mittels Pressluft nacheinander an einem Zuführer bereitgestellt werden und noch an dem Zuführer gehalten aufgesteckt werden. Eine solche Vorrichtung ist beispielsweise aus US009511416B2 bekannt. US009511416B2 beschreibt, laut der bei espacenet verfügbaren Übersetzung der Zusammenfassung, ein luftbetriebenes Vorschubwerkzeug, um Stauchringe einzeln zur Platzierung auf den Schäften der Schließringbolzen bereitzustellen und so für den Einsatz eines Stauchwerkzeugs vorzubereiten. Das Stauchwerkzeug bricht einen Bolzen vom Schließbolzen ab und ein Vakuumsystem zieht die abgebrochenen Bolzen durch eine Vakuumvorrichtung in einen Behälter zur sicheren Entsorgung. Der Zuführmechanismus umfasst ein Magazin, das einen Vorrat an nebeneinander liegenden Halsbändern enthält, ein Präsentationsstück, das kurze Arbeitshalsbänder enthält, und einen vom Arbeiter betätigbaren Auslösemechanismus zwischen den beiden Warteschlangen, um die Halsbänder einzeln vom Magazin zur Präsentationswarteschlange zu übertragen. Es werden zwei Beispiele des Zuführwerkzeugs offenbart, jedes mit einer einzigartigen Auslöseposition.

Das Verwenden von pressluftbetriebenen Werkzeugen kann nachteilhaft sein. Eine Pressluftquelle ist notwendig, die zu einer gewissen Geräuschentwicklung führt. Außerdem ist der Anschluss des Werkzeugs über einen Druckluftschlauch erforderlich, der die Handlichkeit beeinträchtigen kann.

In modernen Fertigungsumgebungen werden zunehmend elektrische Werkzeuge verwendet, sodass eine Infrastruktur für pressluftbetriebene Werkzeuge in einer solchen Umgebung mitunter nicht vorliegt.

### Beschreibung

Es kann als Aufgabe betrachtet werden, ein alternatives Werkzeug vorzuschlagen, das eine bequeme Abgabe von einzelnen Befestigungselementen aus einer Vielzahl von in einem Aufnahmebehälter vorhandenen Befestigungselementen erlaubt, wobei jedoch die Versorgung des Werkzeugs mit Leistung über einen Druckluftschlauch nicht erforderlich ist.

Diese Aufgabe wird gelöst durch den Gegenstand des unabhängigen Anspruchs 1. Weitere vorteilhafte Ausführungsformen ergeben sich aus den abhängigen Ansprüchen sowie aus der folgenden Beschreibung.

Es wird ein Werkzeug zum wiederholten Zuführen einzelner Befestigungselemente aus einem Vorrat mit mehreren Befestigungselementen vorgeschlagen, das Werkzeug aufweisend einen Aufnahmebehälter, eine Führungsvorrichtung, ein biegeweiches, lineares Schubelement, einen elektrischen Antrieb, ein Aktivierungselement, und ein Zuführelement mit einem Abgabeabschnitt, wobei die Führungsvorrichtung an den Aufnahmebehälter anschließt und sich von dort in das Zuführelement erstreckt und an dem Abgabeabschnitt endet, wobei die Führungsvorrichtung zumindest abschnittsweise entlang einer gekrümmten Führungsbahn verläuft, wobei die Führungsvorrichtung einen entlang der Führungsbahn weitgehend konstanten Öffnungsquerschnitt aufweist, der radial zu der Führungsbahn von mindestens einem Führungselement begrenzt ist, um eine Vielzahl von direkt aneinander anschließenden Befestigungselementen entlang der Führungsbahn zu führen, wobei sich das Schubelement von dem Aufnahmebehälter in die Führungsvorrichtung erstreckt und einen an den Öffnungsquerschnitt angepassten Außenquerschnitt aufweist und dazu ausgebildet ist, in der Führungsvorrichtung entlang der Führungsbahn geführt zu werden, wobei der elektrische Antrieb mit dem Schubelement gekoppelt ist und dazu ausgebildet ist, das Schubelement inkrementell entlang der Führungsbahn zu verschieben, um in der Führungsvorrichtung angeordnete Befestigungselemente zu dem Abgabeabschnitt zu drängen, und wobei der Antrieb mit dem Aktivierungselement gekoppelt ist und dazu ausgebildet ist, beim Betätigen des Aktivierungselements das Schubelement um eine vorgebbare Strecke in Richtung des Abgabeabschnitts zu bewegen.

Das erfindungsgemäße Werkzeug ist folglich dazu ausgebildet, nacheinander einzelne Befestigungselemente an einem Abgabeabschnitt eines Zuführelements bereitzustellen. Diese sind von einem Benutzer zum Durchführen einer Montagetätigkeit zu verwenden. Das Werkzeug kann daher bevorzugt ein handgehaltenes Werkzeug oder ein Endeffektor an einem Roboter sein, das mit einer geeigneten Vielzahl von Befestigungselementen ausgestattet ist. Ziel des erfindungsgemäßen Werkzeugs ist, zuverlässig, wiederholt und einfach einzelne Befestigungselemente bereitzustellen, ohne eine aufwändige manuelle Interaktion sowie ohne die Notwendigkeit einer Pressluftleitung zu erfordern.

Die einzelnen Befestigungselemente sind direkt in der Führungsvorrichtung gelagert. Die Führungsvorrichtung ist dabei als ein schlangenartiges Bauteil zu verstehen, das sich entlang einer gekrümmten Bewegungsbahn erstreckt und bevorzugt einen weitgehend konstanten Querschnitt zum Aufnehmen der einzelnen Befestigungselemente aufweist. Die Befestigungselemente sind darin so angeordnet, dass sie eine kettenartige Struktur ausbilden und auf Stoß aneinander positioniert sind. Abhängig von der durchzuführenden Tätigkeit kann die Anzahl der Befestigungselemente beeinflusst werden, die in der Führungsvorrichtung vorliegen. Wird das erfindungsgemäße Werkzeug etwa zum Bereitstellen von Schließringen verwendet, die auf den Schaft eines Schließringbolzens aufgesteckt werden, könnten zum Abdecken des Bedarfs eines Arbeitstages mehrere hundert solcher Befestigungselemente in dem Werkzeug gespeichert sein. Die Führungsvorrichtung könnte demnach eine Längenerstreckung aufweisen, die signifikant einen Durchmesser oder ein anderes Breitenmaß übersteigt.

Die Bewegungsbahn könnte dabei wendelartig ausgeführt sein und zumindest größtenteils einen bestimmten Wendeldurchmesser umlaufen. In einem befüllten Zustand ist bevorzugt die gesamte Führungsvorrichtung mit Befestigungselementen befüllt, die sich von einem inneren Ende oder einer Position nahe des inneren Endes der Führungsvorrichtung zu dem Abgabeabschnitt hin Stoß an Stoß erstrecken.

Zum Fördern der Befestigungselemente entlang der Führungsvorrichtung ist das Schubelement vorgesehen. Dies ist biegeweich ausgeführt, sodass es an dem inneren Ende in die Führungsvorrichtung eingeführt, dann entlang der Führungsvorrichtung verschoben werden kann und hierbei seine Form an die Bewegungsbahn anpasst. Wird das Schubelement über den elektrischen Antrieb in Richtung des Abgabeabschnitts bewegt, drängt das Schubelement die gesamte Kette aus einzelnen Befestigungselementen in Richtung des Abgabeabschnitts. Wird ein Befestigungselement an dem Abgabeabschnitt entnommen, entsteht unmittelbar an dem Abgabeabschnitt eine Lücke. Durch anschließendes Bewegen des Schubelements können die verbleibenden Befestigungselemente um eine Strecke bewegt werden, die maximal der Länge der vorliegenden Lücke entspricht. Nach Entnahme des äußersten Befestigungselements kann folglich das Schubelement bewegt werden, um ein neues Befestigungselement an dem Abgabeabschnitt bereitzustellen und dort entnommen zu werden.

Da das Schubelement je nach Anzahl noch verbleibender Befestigungselemente unterschiedlich weit in der Führungsvorrichtung steckt, wird der verbleibende Teil in dem Aufnahmebehälter gelagert. Das Schubelement ist aufgrund der Biegeweichheit dort gefaltet, gewickelt oder auf andere Art kompaktiert.

Das Zuführelement könnte als ein gerader oder gebogener Arm ausgebildet sein, der von dem Werkzeug absteht und in dem Abgabeabschnitt endet. Es bietet sich an, eine möglichst ergonomische Gestaltung zu realisieren, bei der ein Benutzer das Werkzeug handgehalten an die entsprechende Komponente führen kann, um dort das Befestigungselement abgeben zu können.

Der Abgabeabschnitt kann wie bei üblichen Werkzeugen, die auf der Verwendung von Druckluft basieren, ausgestaltet sein. Dies bedeutet, dass das betreffende Befestigungselement an dem Abgabeabschnitt so präsentiert wird, dass es ohne vorherige Entnahme auf eine korrespondierende Komponente gesteckt oder auf andere Weise befestigt werden kann. Ist das Befestigungselement etwa ein Schließring, könnte der Abgabeabschnitt so ausgebildet sein, dass eine Öffnung des Schließrings von außen frei zugänglich ist, sodass der Schließring direkt auf einen Schließringbolzen aufsteckbar ist, während er noch in dem Abgabeabschnitt ruht.

Die Bewegung der Befestigungselemente zum Abgabeabschnitt kann durch das Aktivierungselement initiiert werden. Das Aktivierungselement muss nicht zwangsläufig ein manueller Schalter sein, der von einer Benutzer betätigt wird, wobei dies jedoch durchaus denkbar ist. Als Variante könnten ein oder mehrere Sensoren in Erwägung gezogen werden, die beim Feststellen eines bestimmten Ereignisses den Antrieb ansteuern. Dies könnte etwa automatisch dann passieren, wenn ein Befestigungselement an dem Abgabeabschnitt entnommen wurde und dort eine Lücke entsteht. Wird das Werkzeug als Endeffektor an einem Roboterarm angeordnet, könnte das Aktivierungselement auch extern von dem Werkzeug ausgeführt sein und durch ein Aktivierungssignal repräsentiert werden. Wird der Roboterarm nach dem Herstellen einer Verbindung bewegt, könnte eine Steuereinheit ein Aktivierungssignal abgeben, das das Werkzeug dazu veranlasst, das Schubelement zu bewegen.

Das erfindungsgemäße Werkzeug kann folglich wie bekannte, auf Druckluft basierende Werkzeuge zum wiederholten Zuführen von Befestigungselementen genutzt werden, ohne auf eine Druckluftleitung zurückgreifen zu müssen. Es ist überdies denkbar, das Werkzeug mit einem wiederaufladbaren, elektrischen Energiespeicher auszustatten, der einen autonomen Betrieb ermöglicht und die Handhabung durch Wegfall der Druckluftleitung und eines Versorgungskabels deutlich verbessert.

Es ist günstig, wenn das Schubelement weitgehend inkompressibel ist. Dadurch kann es in die Führungsvorrichtung gedrängt werden, um sich dort in ihrer Form der Führungsbahn anzupassen, ohne jedoch eine Stauchung zu erlangen. Dadurch wird verhindert, dass sich das Material des Schubelements lokal auswölbt und sich in der Führungsvorrichtung verkantet oder verkeilt.

Das Schubelement könnte als Kette mit mehreren, gelenkig miteinander verbundenen Kettengliedern ausgebildet sein. Die Kettenglieder könnten beispielsweise aus einem metallischen Material oder einem Kunststoff mit einer ausreichenden Festigkeit bestehen. Ähnlich wie beispielsweise bei einer Fahrradkette sind die einzelnen Kettenglieder bevorzugt weitgehend spielfrei schwenkbar aneinander gelagert. Dadurch ist die Kette inkompressibel und gleichzeitig biegeweich.

Der elektrische Antrieb könnte einen Schrittmotor aufweisen. Ein Schrittmotor kennzeichnet sich durch ein steuerbares, schrittweise rotierendes elektromagnetisches Feld der Statorspulen. Dies ermöglicht, den Schrittmotor inkrementell sehr präzise zu rotieren. Dadurch kann das Schubelement besonders gut positioniert werden, da der Antrieb des Schubelements präzise auf das Befestigungselement anpassbar ist.

Das Schubelement könnte eine Länge aufweisen, die die Länge der Führungsvorrichtung übersteigt. Damit kann ein Teil des Schubelements außerhalb der Führungsvorrichtung verbleiben und dort mit dem Antrieb gekoppelt werden. Das Schubelement kann folglich auch dann noch angetrieben werden, wenn sich lediglich ein einziges Befestigungselement in der Führungsvorrichtung befindet, da dann das Schubelement noch aus der Führungsvorrichtung so weit herausragen könnte, sodass der Antrieb mit diesem Abschnitt koppelbar ist.

Der Aufnahmebehälter könnte dazu ausgebildet sein, das Schubelement zumindest weitgehend vollständig aufzunehmen. Ist die Führungsvorrichtung vollständig mit Befestigungselementen gefüllt, ragt das Schubelement lediglich marginal in die Führungsvorrichtung hinein. Folglich ist ein bedeutender Teil des Schubelements außerhalb der Führungsvorrichtung und wird hierzu von dem Aufnahmebehälter aufgenommen. Durch seine biegeweiche Form kann er sich dort beispielsweise zusammenfalten und raumsparend lagern.

Der elektrische Antrieb könnte ein Eingriffselement aufweisen, das mit dem Schubelement in Eingriff bringbar ist. Das Eingriffselement könnte beispielsweise ein Zahnrad, ein Kettenrad, ein Reibelement oder ähnliches umfassen, das dazu in der Lage ist, insbesondere einen rotatorischen Antrieb in einen linearen Antrieb des Schubelements umzusetzen. Hierbei ist das Eingriffselement an die Ausführung des Schubelements angepasst.

Der elektrische Antrieb könnte an einem inneren Ende der Führungsvorrichtung angeordnet sein, das dem Abgabeabschnitt entgegengesetzt ist. Dadurch ist die Führungsvorrichtung von dem elektrischen Antrieb unabhängig, sodass beispielsweise eine einfache Entnahme der Führungsvorrichtung möglich ist. Der Antrieb und das Schubelement sind dann in einem Bereich des Werkzeugs angeordnet, der beim Austausch einer Führungsvorrichtung verbleibt.

Das Werkzeug könnte ferner einen Sensor zum Erfassen des Schubelements aufweisen, wobei der Sensor an dem Zuführelement angeordnet ist und dazu ausgebildet ist, beim Erkennen des Schubelements in dem Zuführelement ein Signal auszugeben, das eine Erschöpfung eines Vorrats an Befestigungselementen repräsentiert. Das Werkzeug ist folglich selbstständig in der Lage, das weitere Bewegen des Schubelements zu verhindern und/oder einem Benutzer einen Hinweis darauf zu geben, dass der Vorrat erschöpft ist oder kurz davor ist, erschöpft zu sein. Der Sensor könnte entweder direkt an dem Abgabeabschnitt angeordnet sein oder etwas hiervon beabstandet, sodass ein betreffender Teil des Schubelements vor dem Erreichen des Abgabeabschnitts erkannt werden kann.

Das Schubelement könnte ein Magnetelement aufweisen, wobei der Sensor ein Hall-Sensor ist, der dazu ausgebildet ist, das Signal auszugeben, wenn das Magnetelement direkt an dem Sensor platziert ist. Das Magnetelement wird von einem Hall-Sensor sehr leicht erkannt, sodass das Magnetelement als eine einfache und wirkungsvolle Markierung verwendbar ist.

Der Antrieb könnte dazu ausgebildet sein, das Schubelement bei geleerter Führungsvorrichtung vollständig in den Aufnahmebehälter zu bewegen, wobei zumindest die Führungsvorrichtung als austauschbares Magazin ausgebildet ist. Folglich wird das Schubelement in eine sichere, neutrale Stellung bewegt, bevor die Führungsvorrichtung als Magazin getauscht wird. Dies vereinfacht die Handhabung erheblich und verhindert zudem eine Beschädigung des Schubelements.

Die Führungsvorrichtung könnte in einem mit dem Aufnahmebehälter verbindbaren Magazingehäuse angeordnet sein. Das Magazingehäuse umhüllt die gekrümmte Führungsvorrichtung und kann diese schützen. Zudem ist das Magazingehäuse bevorzugt mit einem geeigneten Verschluss versehen, das ein einfaches Anbringen oder Entfernen des Magazingehäuses erlaubt.

Das Aktivierungselement könnte einen manuell betätigbaren Schaltknopf aufweisen. Der Benutzer kann folglich den Schaltknopf betätigen, um das nächste Befestigungselement an dem Abgabeabschnitt zu positionieren.

Die Erfindung betrifft weiterhin ein Befestigungssystem, aufweisend ein Werkzeug nach einem der vorhergehenden Ansprüche, eine Vielzahl von Verbindungselementen und eine Vielzahl von Befestigungselementen, wobei die Verbindungselemente einen Schaft aufweisen, auf den die Befestigungselemente aufschieb- oder aufsteckbar sind, und wobei die Befestigungselemente in der Führungsvorrichtung des Werkzeugs angeordnet sind. Die Verbindungselemente können beispielsweise ein Schließringbolzen sein, während die Befestigungselemente Schließringe sind. Die Befestigungselemente sind dann in der Führungsvorrichtung angeordnet und können bei größeren Schließringbolzenverbindungsanordnungen sehr rasch und zuverlässig bereitgestellt werden.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1a bis 1c: eine schematische Darstellung nebst Detailansichten eines Werkzeugs gemäß einem Ausführungsbeispiel.
- Fig. 2: eine schematische Darstellung des Wirkprinzips.
- Fig. 3: eine Detailansicht des Werkzeugs.

### Detaillierte Beschreibung von Ausführungsbeispielen

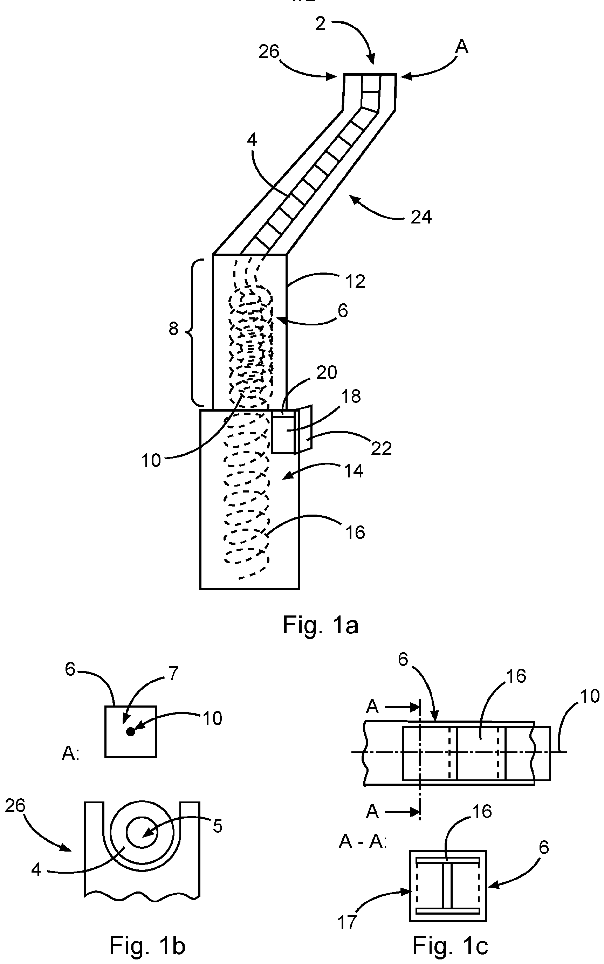

Fig. 1a zeigt ein Werkzeug 2 zum wiederholten Zuführen einzelner Befestigungselemente 4 aus einem Vorrat mit mehreren Befestigungselementen 4. Die Befestigungselemente 4 können beispielhaft Schließringe sein, die jeweils auf den Schaft eines Schließringbolzens gesteckt werden können.

Das Werkzeug 2 weist eine Führungsvorrichtung 6 auf, welche in einem ersten Abschnitt 8 entlang einer gekrümmten Führungsbahn 10 verläuft, sodass sich dort eine im Wesentlichen wendelförmige Struktur ergibt. Dadurch wird eine große Lauflänge bereitgestellt, entlang der die Befestigungselemente 4 auf Stoß angeordnet sind. Die Führungsvorrichtung 6 wird teilweise von einem Magazingehäuse 12 umgeben und kann darin befestigt sein. Die Kombination aus der Führungsvorrichtung 10 und dem Magazingehäuse 12 bildet ein Magazin aus, welches leicht austauschbar ist.

Die Führungsvorrichtung 6 schließt an einen Aufnahmebehälter 14 an, in dem sich ein Schubelement 16 befindet. Das Schubelement 16 ist biegeweich und linear bzw. linienförmig ausgebildet. Es ist so ausgeführt, dass es in die Führungsvorrichtung 6 einführbar und dort linear entlang der Führungsbahn 10 bewegbar ist. Das Schubelement 16 könnte als Kette ausgebildet sein, die mittels eines Antriebs 18, der ein hier als Kettenrad ausgeführtes Eingriffselement 20 umfasst, antreibbar ist. Ein Aktivierungselement 22 könnte vorgesehen sein, das dazu ausgebildet ist, durch Betätigung den Antrieb 18 anzusteuern, um das Schubelement 16 und die Befestigungselemente 4 zu bewegen.

An einem dem Antrieb 18 abgewandten Ende der Führungsvorrichtung 6 schließt sich ein Zuführelement 24 als länglicher, abstehender Arm an und weist einen Abgabeabschnitt 26 auf. Die Befestigungselemente 4 werden in der Führungsvorrichtung 6 entlang des Zuführelements 24 bis zu dem Abgabeabschnitt 26 hin gefördert, wo sie dann einzeln entnehmbar sind.

Im Detail A ist ein Befestigungselement 4 in Form eines Schließringes gezeigt, der in dem Abgabeabschnitt 26 ruht. Eine Innenöffnung 5 ist von außen zugänglich, sodass bei präsentiertem Befestigungselement 4 dieses auf einen Schließringbolzen als Verbindungselement, wie in Fig. 1a im Detail angedeutet, steckbar ist, um nach dem Aufstecken das Werkzeug 2 von dem Schließringbolzen wegzubewegen.

Fig. 1b zeigt exemplarisch die Führungsvorrichtung 6 in einem Schnitt senkrecht zur Bewegungsbahn 10, welche hier mittig angedeutet ist. Die Führungsvorrichtung 6 weist einen Innenquerschnitt 7 auf, der von Führungselementen, etwa den Innenquerschnitt 7 umgebende Wandungen, begrenzt wird. Wie in Fig. 1c dargestellt ist ein Außenquerschnitt 17 des Schubelements 16 so an den Innenquerschnitt 7 angepasst, dass es sich dort leicht bewegen lässt. Das Schubelement 16 ist hier als Kette gezeigt, die mehrere gelenkig miteinander verbundene Kettenglieder umfasst.

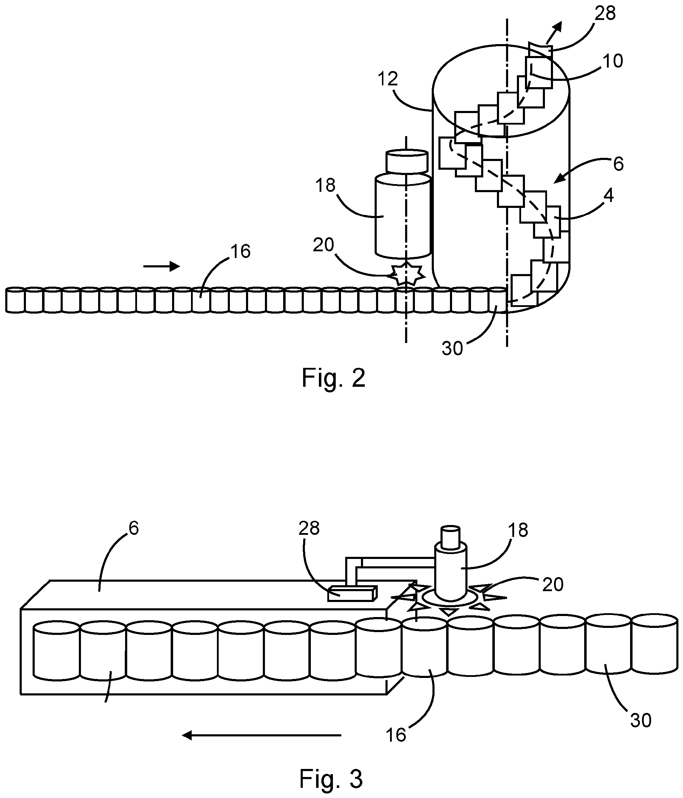

In Fig. 2 und 3 wird schematisch dargestellt, wie sich das Schubelement 16 in die Führungsvorrichtung 6 erstreckt und Befestigungselemente 4 in Richtung des Abgabeabschnitts 26 fördert. Das Eingriffselement 20 ist von dem elektrischen Antrieb 18 angetrieben und bewegt das Schubelement 16 in der Führungsvorrichtung 6, sodass die dort auf Stoß vorliegenden Befestigungselemente verschoben werden. Ist der Antrieb 18 als Schrittmotor ausgeführt, kann die Bewegung sehr präzise gesteuert werden.

Ein Sensor 28, der hier als Hall-Sensor ausgeführt ist, ist an einem dem Abgabeabschnitt 26 zugewandten Ende des Magazingehäuses 12 vorgesehen. Es ist vorstellbar, das Schubelement 16 mit einem Magneten 30 auszustatten, sodass der Sensor 28 diesen erfassen kann, sobald das Schubelement den Sensor 28 erreicht. Dadurch kann ein Signal initiiert werden, das den annähernd aufgebrauchten Vorrat an Befestigungselementen 4 anzeigt.

Ergänzend ist darauf hinzuweisen, dass "umfassend" oder "aufweisend" keine anderen Elemente oder Schritte ausschließt und "eine" oder "ein" keine Vielzahl ausschließt. Bezugszeichen in den Ansprüchen sind nicht als Einschränkung anzusehen.

### Bezugszeichenliste

- 2: Werkzeug
- 4: Befestigungselement / Schließring
- 6: Führungsvorrichtung
- 7: Innenquerschnitt
- 8: erster Abschnitt
- 9: Führungselement
- 10: Führungsbahn
- 12: Magazingehäuse
- 14: Aufnahmebehälter
- 15: Kettenglied
- 16: Schubelement
- 17: Außenquerschnitt
- 18: Antrieb
- 20: Eingriffselement
- 22: Aktivierungselement
- 24: Zuführelement
- 25: Verbindungselement / Schließringbolzen
- 26: Abgabeabschnitt
- 28: Sensor
- 30: Magnet

## Patentansprüche

1. Werkzeug (2) zum wiederholten Zuführen einzelner Befestigungselemente (4) aus einem Vorrat mit mehreren Befestigungselementen (4), aufweisend:
einen Aufnahmebehälter (14),
eine Führungsvorrichtung (6),
ein biegeweiches, lineares Schubelement (16),
einen elektrischen Antrieb (18),
ein Aktivierungselement (22), und
ein Zuführelement (24) mit einem Abgabeabschnitt (26),
wobei die Führungsvorrichtung (6) an den Aufnahmebehälter (14) anschließt und sich von dort in das Zuführelement (24) erstreckt und an dem Abgabeabschnitt (26) endet,
wobei die Führungsvorrichtung (6) zumindest abschnittsweise entlang einer gekrümmten Führungsbahn (10) verläuft,
wobei die Führungsvorrichtung (6) einen entlang der Führungsbahn (10) weitgehend konstanten Öffnungsquerschnitt aufweist, der radial zu der Führungsbahn (6) von mindestens einem Führungselement begrenzt ist, um eine Vielzahl von direkt aneinander anschließenden Befestigungselementen (4) entlang der Führungsbahn (6) zu führen,
wobei sich das Schubelement (16) von dem Aufnahmebehälter (14) in die Führungsvorrichtung (6) erstreckt und einen an den Öffnungsquerschnitt angepassten Außenquerschnitt (17) aufweist und dazu ausgebildet ist, in der Führungsvorrichtung (6) entlang der Führungsbahn (10) geführt zu werden,
wobei der elektrische Antrieb (18) mit dem Schubelement (16) gekoppelt ist und dazu ausgebildet ist, das Schubelement (16) inkrementell entlang der Führungsbahn (10) zu verschieben, um in der Führungsvorrichtung (6) angeordnete Befestigungselemente (4) zu dem Abgabeabschnitt (26) zu drängen, und
wobei der Antrieb mit dem Aktivierungselement (22) gekoppelt ist und dazu ausgebildet ist, beim Betätigen des Aktivierungselements (22) das Schubelement (16) um eine vorgebbare Strecke in Richtung des Abgabeabschnitts (26) zu bewegen.

2. Werkzeug (2) nach Anspruch 1,
wobei das Schubelement (16) weitgehend inkompressibel ist.

3. Werkzeug (2) nach Anspruch 1 oder 2,
wobei das Schubelement (16) als Kette mit mehreren, gelenkig miteinander verbundenen Kettengliedern ausgebildet ist.

4. Werkzeug (2) nach einem der vorhergehenden Ansprüche,
wobei der elektrische Antrieb (18) einen Schrittmotor aufweist.

5. Werkzeug (2) nach einem der vorhergehenden Ansprüche,
wobei das Schubelement (16) eine Länge aufweist, die die Länge der Führungsvorrichtung (6) übersteigt.

6. Werkzeug (2) nach einem der vorhergehenden Ansprüche,
wobei der Aufnahmebehälter (14) dazu ausgebildet ist, das Schubelement (16) zumindest weitgehend vollständig aufzunehmen.

7. Werkzeug (2) nach einem der vorhergehenden Ansprüche,
wobei der elektrische Antrieb (18) ein Eingriffselement (20) aufweist, das mit dem Schubelement (16) in Eingriff bringbar ist.

8. Werkzeug (2) nach einem der vorhergehenden Ansprüche,
wobei der elektrische Antrieb (18) an einem inneren Ende der Führungsvorrichtung (6) angeordnet ist, das dem Abgabeabschnitt (26) entgegengesetzt ist.

9. Werkzeug (2) nach einem der vorhergehenden Ansprüche,
ferner aufweisend einen Sensor (28) zum Erfassen des Schubelements (16),
wobei der Sensor (28) an dem Zuführelement (24) angeordnet ist und dazu ausgebildet ist, beim Erkennen des Schubelements (16) in dem Zuführelement (24) ein Signal auszugeben, das eine Erschöpfung eines Vorrats an Befestigungselementen (4) repräsentiert.

10. Werkzeug (2) nach Anspruch 9,
wobei das Schubelement (16) ein Magnetelement (30) aufweist, und
wobei der Sensor (28) ein Hall-Sensor ist, der dazu ausgebildet ist, das Signal auszugeben, wenn das Magnetelement (30) direkt an dem Sensor (28) platziert ist.

11. Werkzeug (2) nach einem der vorhergehenden Ansprüche,
wobei der Antrieb (18) dazu ausgebildet ist, das Schubelement (16) bei geleerter Führungsvorrichtung (6) vollständig in den Aufnahmebehälter (14) zu bewegen, und
wobei zumindest die Führungsvorrichtung (6) als austauschbares Magazin ausgebildet ist.

12. Werkzeug (2) nach Anspruch 11,
wobei die Führungsvorrichtung (6) in einem mit dem Aufnahmebehälter (14) verbindbaren Magazingehäuse (12) angeordnet ist.

13. Werkzeug (2) nach einem der vorhergehenden Ansprüche,
wobei das Aktivierungselement (22) einen manuell betätigbaren Schaltknopf aufweist.

14. Befestigungssystem, aufweisend:
ein Werkzeug (2) nach einem der vorhergehenden Ansprüche,
eine Vielzahl von Verbindungselementen und
eine Vielzahl von Befestigungselementen (4),
wobei die Verbindungselemente einen Schaft aufweisen, auf den die Befestigungselemente (4) aufschieb- oder aufsteckbar sind, und
wobei die Befestigungselemente (4) in der Führungsvorrichtung (6) des Werkzeugs (2) angeordnet sind.

## Claims

1. Tool (2) for repeatedly feeding individual fastening elements (4) from a supply of a plurality of fastening elements (4), comprising:
a receiving container (14),
a guide device (6),
a flexible, linear thrust element (16),
an electric drive (18),
an activation element (22), and
a feed element (24) with a dispensing portion (26),
wherein the guide device (6) adjoins the receiving container (14) and extends therefrom into the feed element (24) and terminates at the dispensing portion (26),
wherein the guide device (6) runs at least in some sections along a curved guide track (10),
wherein along the guide track (10) the guide device (6) has a substantially constant opening cross section which is radially defined by at least one guide element relative to the guide track (6) in order to guide a plurality of fastening elements (4) directly adjacent to one another along the guide track (6),
wherein the thrust element (16) extends from the receiving container (14) into the guide device (6) and has an external cross section (17) which is adapted to the opening cross section and which is configured to be guided in the guide device (6) along the guide track (10),
wherein the electric drive (18) is coupled to the thrust element (16) and is configured to displace the thrust element (16) incrementally along the guide track (10) in order to urge fastening elements (4) arranged in the guide device (6) to the dispensing portion (26), and
wherein the drive is coupled to the activation element (22) and is configured to move the thrust element (16) by a predeterminable distance in the direction of the dispensing portion (26) when the activation element (22) is actuated.

2. Tool (2) according to Claim 1,
wherein the thrust element (16) is substantially incompressible.

3. Tool (2) according to Claim 1 or 2,
wherein the thrust element (16) is configured as a chain with a plurality of chain links which are connected together in an articulated manner.

4. Tool (2) according to one of the preceding claims, wherein the electric drive (18) has a stepper motor.

5. Tool (2) according to one of the preceding claims, wherein the thrust element (16) has a length which exceeds the length of the guide device (6).

6. Tool (2) according to one of the preceding claims, wherein the receiving container (14) is configured to receive the thrust element (16) at least substantially entirely.

7. Tool (2) according to one of the preceding claims, wherein the electric drive (18) has an engagement element (20) which is able to be brought into engagement with the thrust element (16).

8. Tool (2) according to one of the preceding claims, wherein the electric drive (18) is arranged on an internal end of the guide device (6) which opposes the dispensing portion (26).

9. Tool (2) according to one of the preceding claims, further comprising a sensor (28) for detecting the thrust element (16),
wherein the sensor (28) is arranged on the feed element (24) and is configured to output a signal which represents an exhausted supply of fastening elements (4) when the thrust element (16) is identified in the feed element (24).

10. Tool (2) according to Claim 9,
wherein the thrust element (16) has a magnet element (30), and
wherein the sensor (28) is a Hall sensor which is configured to output the signal when the magnet element (30) is directly placed on the sensor (28).

11. Tool (2) according to one of the preceding claims, wherein the drive (18) is configured to move the thrust element (16) entirely into the receiving container (14) when the guide device (6) is empty, and
wherein at least the guide device (6) is configured as a replaceable magazine.

12. Tool (2) according to Claim 11,
wherein the guide device (6) is arranged in a magazine housing (12) which may be connected to the receiving container (14).

13. Tool (2) according to one of the preceding claims, wherein the activation element (22) has a manually actuatable switch button.

14. Fastening system, comprising:
a tool (2) according to one of the preceding claims, a plurality of connecting elements and
a plurality of fastening elements (4),
wherein the connecting elements have a shank, the fastening elements (4) being able to be pushed or positioned thereon, and
wherein the fastening elements (4) are arranged in the guide device (6) of the tool (2).

## Revendications

1. Outil (2) pour une alimentation répétée en éléments de fixation individuels (4) à partir d'une réserve comprenant plusieurs éléments de fixation (4), comprenant :
un réceptacle (14),
un dispositif de guidage (6),
un élément de poussée linéaire flexible (16),
un entraînement électrique (18),
un élément d'activation (22), et
un élément d'alimentation (24) avec une section de distribution (26),
le dispositif de guidage (6) se raccordant au réceptacle (14) et, depuis là, s'étendant dans l'élément d'alimentation (24) et se terminant à la section de distribution (26),
le dispositif de guidage (6) s'étendant au moins partiellement le long d'une voie de guidage (10) incurvée,
le dispositif de guidage (6) présentant une section transversale d'ouverture largement constante le long de la voie de guidage (10), qui est délimitée radialement par rapport à la voie de guidage (6) par au moins un élément de guidage, afin de guider le long de la voie de guidage (6) une pluralité d'éléments de fixation (4) directement adjacents les uns aux autres,
l'élément de poussée (16) s'étendant du réceptacle (14) dans le dispositif de guidage (6) et présentant une section transversale extérieure (17) adaptée à la section transversale d'ouverture et étant conçu de façon à être guidé dans le dispositif de guidage (6) le long de la voie de guidage (10),
l'entraînement électrique (18) étant relié à l'élément de poussée (16) et étant conçu de façon à déplacer l'élément de poussée (16) de manière incrémentielle le long de la voie de guidage (10) afin de pousser des éléments de fixation (4) disposés dans le dispositif de guidage (6) vers la section de distribution (26), et
l'entraînement étant relié à l'élément d'activation (22) et étant conçu de façon à déplacer l'élément de poussée (16) sur une distance apte à être prédéfinie en direction de la section de distribution (26) lorsque l'élément d'activation (22) est actionné.

2. Outil (2) selon la revendication 1,
dans lequel l'élément de poussée (16) est sensiblement incompressible.

3. Outil (2) selon la revendication 1 ou la revendication 2,
dans lequel l'élément de poussée (16) est réalisé sous la forme d'une chaîne comportant plusieurs maillons reliés entre eux de manière articulée.

4. Outil (2) selon l'une des revendications précédentes,
dans lequel l'entraînement électrique (18) comprend un moteur pas à pas.

5. Outil (2) selon l'une des revendications précédentes,
dans lequel l'élément de poussée (16) présente une longueur qui dépasse la longueur du dispositif de guidage (6) .

6. Outil (2) selon l'une des revendications précédentes,
dans lequel le réceptacle (14) est conçu de façon à recevoir au moins en grande partie complètement l'élément de poussée (16).

7. Outil (2) selon l'une des revendications précédentes,
dans lequel l'entraînement électrique (18) présente un élément d'engagement (20) apte à être mis en engagement avec l'élément de poussée (16).

8. Outil (2) selon l'une des revendications précédentes,
dans lequel l'actionneur électrique (18) est agencé à une extrémité interne du dispositif de guidage (6) opposée à la section de distribution (26).

9. Outil (2) selon l'une des revendications précédentes,
comprenant en outre un capteur (28) de détection de l'élément de poussée (16),
le capteur (28) étant agencé sur l'élément d'alimentation (24) et étant adapté pour émettre un signal représentatif de l'épuisement d'une réserve d'éléments de fixation (4) lors de la détection de l'élément de poussée (16) dans l'élément d'alimentation (24).

10. Outil (2) selon la revendication 9,
dans lequel l'élément de poussée (16) comprend un élément magnétique (30), et
dans lequel le capteur (28) est un capteur à effet Hall configuré pour émettre le signal lorsque l'élément magnétique (30) est placé directement sur le capteur (28) .

11. Outil (2) selon l'une des revendications précédentes,
dans lequel l'entraînement (18) est conçu de façon à déplacer l'élément de poussée (16) complètement dans le réceptacle (14) lorsque le dispositif de guidage (6) est vide, et
dans lequel au moins le dispositif de guidage (6) est conçu sous forme d'un magasin interchangeable.

12. Outil (2) selon la revendication 11,
dans lequel le dispositif de guidage (6) est agencé dans un boîtier de magasin (12) apte à être relié au réceptacle (14) .

13. Outil (2) selon l'une des revendications précédentes,
dans lequel l'élément d'activation (22) comporte un bouton de commande actionnable manuellement.

14. Système de fixation, comprenant :
un outil (2) selon l'une des revendications précédentes, une pluralité d'éléments de liaison et
une pluralité d'éléments de fixation (4),
les éléments de liaison présentant une tige sur laquelle les éléments de fixation (4) sont aptes à être enfilés ou emboîtés, et
les éléments de fixation (4) étant agencés dans le dispositif de guidage (6) de l'outil (2).
